# EUROPEAN PATENT APPLICATION

(11) **EP 4 773 023 A1**
(43) Date of publication of application: **08.07.2026**
(21) Application number: 24858505.1
(22) Date of filing: 26.08.2024
(51) Int. Cl.: G06F 16/957

(54) **PAGE SWITCHING METHOD AND APPARATUS, AND DEVICE AND STORAGE MEDIUM**

(30) Priority: 31.08.2023 CN 202311118620
(71) Applicant: Beijing Zitiao Network Technology Co., Ltd., Beijing 100190 (CN)
(72) Inventor: LI, Lei, Beijing 100028 (CN); YANG, Qian, Beijing 100028 (CN)
(74) Representative: Grünecker Patent- und Rechtsanwälte PartG mbB
(86) International application number: PCT/CN2024/114476
(87) International publication number: WO 2025/044969

(57) **Abstract**

Embodiments of the disclosure provide a method, an apparatus, a device, and a storage medium for page switching. In response to a page switching operation triggered by a user, first content corresponding to a first page and second content corresponding to a second page are obtained. The page switching is to switch from the first page to the second page. The first content and the second content are rendered. In a process of displaying the first content, a rendering progress of the second content is obtained. The first page is switched to the second page based on the rendering progress. According to the method for page switching provided by the embodiments of the disclosure, the problem of abnormal display caused by switching from the first page to the second page before the content of the second page has been fully rendered can be prevented, smooth and fluid switching between pages can be ensured, and page switching reliability and page display effect can be improved.

## Description

This application claims priority to Chinese Patent Application No. 202311118620.0, filed on August 31, 2023, and entitled "Method, Apparatus, Device, and Storage Medium for Page Switching", the entire contents of which are incorporated herein by reference.

### FIELD

Embodiments of the present disclosure relate to the technical field of front-end page processing, and in particular to a method, an apparatus, a device, and a storage medium for page switching.

### BACKGROUND

In an operating system of a terminal device, one page corresponds to one page component. When page switching is performed, it is essentially switching of page components. In the related art, when page switching is performed, the old page is directly closed, and a new page is opened. When the new page is opened, an abnormal display (for example, a black screen) may occur during a page switching process since a page component of the new page needs to be created, and thus page switching and display effects are affected.

### SUMMARY

Embodiments of the present disclosure provide a method, an apparatus, a device, and a storage medium for page switching, and may improve the page switching reliability and the page display effect.

According to a first aspect, an embodiment of the present disclosure provides a method for page switching. The method includes the following steps.

In response to a page switching operation triggered by a user, first content corresponding to a first page and second content corresponding to a second page are obtained. The page switching is to switch from the first page to the second page.

The first content and the second content are rendered.

In a process of displaying the first content, a rendering progress of the second content is obtained.

The first page is switched to the second page based on the rendering progress.

According to a second aspect, an embodiment of the present disclosure further provides an apparatus for page switching. The apparatus includes a page content obtaining module, a rendering module, a rendering progress obtaining module, and a page switching module.

The page content obtaining module is configured to obtain, in response to a page switching operation triggered by a user, first content corresponding to a first page and second content corresponding to a second page. The page switching is to switch from the first page to the second page.

The rendering module is configured to render the first content and the second content.

The rendering progress obtaining module is configured to obtain a rendering progress of the second content in a process of displaying the first content.

The page switching module is configured to switch the first page to the second page based on the rendering progress.

According to a third aspect, an embodiment of the present disclosure further provides an electronic device. The electronic device includes:
one or more processors;
a storage device for storing one or more programs.

The one or more programs, when executed by the one or more processors, cause the one or more processors to implement the page switching method according to the embodiments of the present disclosure.

According to a fourth aspect, an embodiment of the present disclosure further provides a storage medium including computer-executable instructions. The computer-executable instructions, when executed by a computer processor, are configured to perform the page switching method according to the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and members and elements are not necessarily drawn to scale.
FIG. 1 is a schematic flowchart of a method for page switching according to an embodiment of the present disclosure;
FIG. 2 is an example diagram of a method for rendering page content according to an embodiment of the present disclosure;
FIG. 3 is a schematic structural diagram of an apparatus for page switching according to an embodiment of the present disclosure;
FIG. 4 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and rather, these embodiments are provided for a more thorough and complete understanding of the present disclosure. It should be understood that the drawings and embodiments of the present disclosure are for illustrative purposes only and are not intended to limit the scope of the present disclosure.

It should be understood that various steps recited in the method embodiments of the present disclosure may be performed in different orders, and/or may be performed in parallel. Further, the method embodiments may include additional steps and/or omit performing the illustrated steps. The scope of the present disclosure is not limited in this regard.

As used herein, the term "comprising" and variations thereof refer to an open-ended inclusion, i.e., "including but not limited to". The term "based on" is "based at least in part on". The term "one embodiment" means "at least one embodiment". The term "another embodiment" means "at least one further embodiment". The term "some embodiments" means "at least some embodiments". The relevant definitions of other terms will be given below.

It should be noted that the concepts such as "first" and "second" mentioned in this disclosure are merely used to distinguish different apparatuses, modules, or units, and are not intended to limit the order of functions performed by the apparatuses, modules, or units or their mutual dependency relationship.

It should be noted that the modification of "a" and "a plurality" mentioned in this disclosure is illustrative and not limiting, and those skilled in the art should understand that "one or more" should be understood unless the context clearly indicates otherwise.

The names of messages or information interacted between a plurality of devices in the embodiments of the present disclosure are for illustrative purposes only and are not intended to limit the scope of such messages or information.

It may be understood that, before the technical solutions disclosed in the embodiments of the present disclosure are used, types, usage scopes, usage scenarios and the like of personal information related to the present disclosure should be notified to the user in an appropriate manner according to the relevant laws and regulations and the authorization should be obtained from the user.

For example, in response to receiving an active request from a user, prompt information is sent to the user to explicitly prompt the user that the requested operation will need to acquire and use the personal information of the user. Therefore, the user may autonomously select whether to provide personal information to software or hardware, such as an electronic device, an application, a server, a storage medium, or the like, executing the operation of the technical solution of the present disclosure according to the prompt information.

As an optional but non-limiting implementation, in response to receiving the active request from the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that data involved in the technical solution (including but not limited to the data itself, the acquisition or use of the data) should follow the requirements of the corresponding laws and regulations and related provisions.

In the related art, when page switching is performed, the old page is directly closed, and a new page is opened. When the new page is opened, the new page will be displayed only after the content of the new page is rendered into the page component since it is necessary to create a page component of the new page, and it takes a certain time to create the page component and render the content of the page. Within this time period, an abnormal display (for example, a black screen) may occur during the page switching process, resulting in an unsmooth page switching.

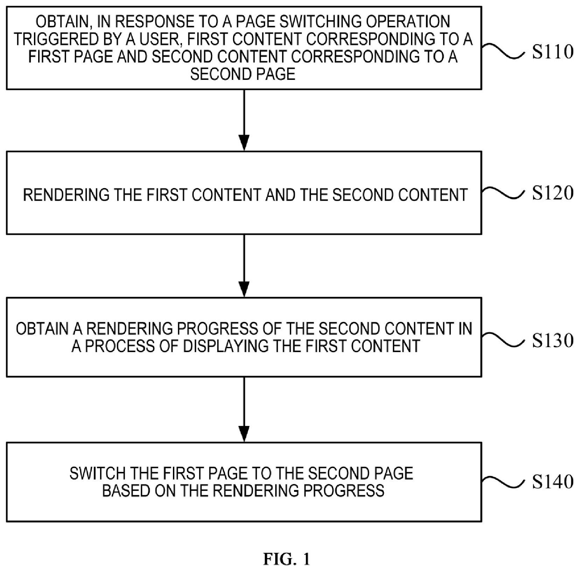

FIG. 1 is a schematic flowchart of a method for page switching according to an embodiment of the present disclosure. The embodiments of the present disclosure are applicable to page switching scenarios. The method may be performed by an apparatus for page switching, which may be implemented in the form of software and/or hardware. Optionally, it may be realized through an electronic device, and the electronic device may be a mobile terminal, a PC, or a server, etc.

As shown in FIG. 1, the method includes the following steps.

At S110, in response to a page switching operation triggered by a user, first content corresponding to a first page and second content corresponding to a second page are obtained.

The page switching is to switch from the first page to the second page. The page may relate to a switch between any pages in a mobile terminal application, i.e., an application (APP), and content displayed in the page may include any format, for example, text, a static image, a dynamic image (for example, a video), various controls, or the like, which is not limited herein. In an application scenario, for a video type APP, for example, a live streaming APP or a small video APP, the page switching may be switching from a preview page to a playing page, or switching from a playing page of one live streaming room to a playing page of another live streaming room. In an application scenario, the first page and the second page may display the same video. Before the page switching operation, the first page is displayed, the Nth frame of the video is displayed on the first page. After the page switching operation is triggered, first content and second content are obtained. The first content may be the (N+1)th frame to be played, and the second content may also be the (N+1)th frame to be played. That is, the first page continuously plays the first content until rendering of the second content is completed, and the first page is switched to the second page.

The first content and the second content are the same or different. In this embodiment, the switching scenario in which the first content and the second content are the same may be switching from a preview page of the video to a playing page. The switching scenario in which the first content and the second content are the same may be switching between any two pages displaying different content.

In this embodiment, the content to be displayed by each page has been configured in the process of developing the APP or the upgrade process, that is, there is a correspondence between the page and the content. Specifically, the manner of obtaining the first content corresponding to the first page and the second content corresponding to the second page may be: obtaining page identifiers of the first page and the second page, and obtaining content of the first page and content of the second page according to the page identifiers.

At S120, the first content and the second content are rendered.

Rendering the first content and the second content may be understood as synchronous or parallel rendering of the first content and the second content. In a setting operation system, presentation of the page and interaction with the user are implemented by a page component, a view component in the page component is configured to realize page presentation, and the view component includes a content buffer area. The process of rendering the content of the page may be understood as: writing the content of the page into the content buffer area of the view component, and then displaying, by the view component, the page according to the written content, thereby rendering the page content. Rendering the first content may be understood as: writing the first content into the view component corresponding to the first page; and rendering the second content may be understood as: writing the second content into the view component corresponding to the second content.

Optionally, the manner of rendering the first content and the second content may be: establishing a first rendering channel corresponding to the first page and a second rendering channel corresponding to the second page; rendering the first content into a first view component corresponding to the first page through the first rendering channel; and rendering the second content into a second view component corresponding to the second page through the second rendering channel.

The rendering channel may be understood as a rendering thread created by rendering the page content, that is, the first rendering channel may also be understood as a first rendering thread, and the second rendering channel may also be understood as a second rendering thread. The process of establishing the first rendering channel corresponding to the first page and the second rendering channel corresponding to the second page may be: establishing a first rendering thread corresponding to the first page and a second rendering thread corresponding to the second page. The process of rendering the first content into the first view component corresponding to the first page through the first rendering channel may be: writing the first content into a content buffer area in the first view component corresponding to the first page through the first rendering thread, and indicating that the first content rendering is completed when the first content has been written into the content buffer area. The process of rendering the second content into the second view component corresponding to the second page through the second rendering channel may be: writing the second content into the content buffer area of the corresponding second view component of the second page through the second rendering thread, and indicating that the second content rendering is completed when the second content has been written into the content buffer area.

In this embodiment, the first page is a page before switching, i.e., the old page, the page component corresponding to the first page and the view component in the page component have been created, and therefore, the first content may be directly rendered into the first view component corresponding to the first page. The second page is a page after switching, i.e., the new page, the page component corresponding to the second page and the view component in the page component need to be newly created, and therefore, the page component corresponding to the second page and the view component in the page component need to be created first, and then the second content is rendered into the second view component corresponding to the second page. Thus, the rendering of the second content is slower than the rendering of the first content.

Optionally, the manner of rendering the second content into the second view component corresponding to the second page through the second rendering channel may be: creating a page component corresponding to the second page; creating the second view component in the page component; and rendering the second content into the second view component through the second rendering channel.

The page component is in a one-to-one correspondence with the page. In this embodiment, the process of creating the page component and the second view component may refer to an existing page development solution, which is not limited herein. Specifically, after the second view component and the page component corresponding to the second page are created, the second content is written into the content buffer area in the second view component through the second rendering channel to render the second content.

Optionally, when the first content is first video frame content and the second content is second video frame content, the manner of rendering the first content into the first view component corresponding to the first page through the first rendering channel may be: controlling, by controlling a player, the first video frame content into the first view component corresponding to the first page through the first rendering channel; and rendering the second content into the second view component corresponding to the second page through the second rendering channel may be: rendering, by controlling the player, the second video frame content into the second view component corresponding to the second page through the second rendering channel.

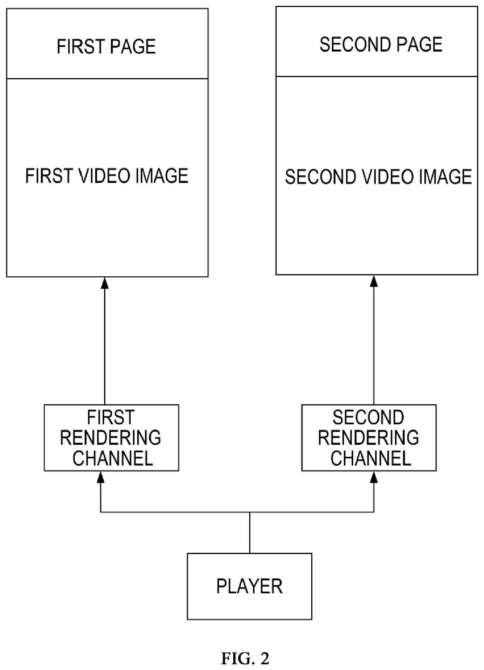

The player is configured to play the video. The player sequentially renders video frames into the view components corresponding to the pages in sequence to play the video. The player in this embodiment has a multichannel rendering capability, that is, the same content may be rendered into multiple view components at the same time, or different content may be respectively rendered into corresponding view components. Specifically, when both the first content and the second content are video content, the first video frame content is rendered by the player into the first view component corresponding to the first page through the first rendering channel, and the second content is rendered by the player into the second view component corresponding to the second page through the second rendering channel. For example, FIG. 2 is an example diagram of rendering page content in this embodiment, as shown in FIG. 2, after obtaining the first video frame content and the second video frame content, the player renders the first video frame content into the first view component corresponding to the first page through the first rendering channel, and renders the second video frame content into the second view component corresponding to the second page through the second rendering channel.

Optionally, the method further includes: setting a window attribute of the second page as transparent and invisible.

The window attribute includes two cases, i.e., a transparent and invisible state and a non-transparent visible state. When the window attribute of the second page is set to be transparent and invisible, the content of the first page is displayed on the interface at this time, the content of the second page is being rendered, and the display of the first page is not affected.

At S130, a rendering progress of the second content is obtained in a process of displaying the first content.

The process of displaying the first content may be understood as: the process of displaying the content corresponding to the first page. The rendering progress includes rendering incomplete and rendering complete. In this embodiment, since the window attribute of the second page is set to be transparent and invisible, the content of the first page is still displayed in the interface, that is, the first content. Specifically, the manner of obtaining the rendering progress of the second content may be: if feedback information indicating a completion of rendering that is returned by the page component of the second page is received, the rendering progress indicates that rendering is completed, and if the feedback information indicating the completion of rendering that is returned by the page component of the second page is not received, the rendering progress indicates that rendering is not completed.

At S140, the first page is switched to the second page based on the rendering progress.

In this embodiment, when the rendering progress of the second content is rendering incomplete, the window attribute of the second page is always transparent and invisible, so as to prevent abnormal displaying of the page caused by the direct switching of the page. When the rendering progress is rendering complete, the window attribute of the second page is adjusted from transparent and invisible to non-transparent and visible.

Specifically, the process of switching the first page to the second page based on the rendering progress may be: when the rendering progress is rendering complete, adjusting the window attribute of the second page from transparent and invisible to non-transparent and visible, and closing the first page to switch from the first page to the second page; when the rendering progress is rendering incomplete, continuing to display the first content and maintaining the window attribute of the second page as transparent and invisible.

In this embodiment, when rendering of the second content is completed, the window attribute of the second page is adjusted to be non-transparent and visible, the second page may be normally displayed, and after the first page is closed, the process of switching from the first page to the second page is implemented. If the second content is the second video frame content, after switching to the second page, the player sequentially renders the second video frame content into the view component of the second page in sequence, so as to play the video content in the second page. When the rendering progress is rendering incomplete, the first content continues to be displayed and the window attribute of the second page is kept transparent and invisible, so as to prevent abnormal displaying of the page caused by the direct switching of the page.

In an application scenario, the first page is a live streaming preview page, and the second page is a live streaming room playing page. That is, the live streaming preview page is switched to the live streaming room playing page, and the content displayed in the live streaming preview page and the content displayed in the live streaming room playing page are the same video stream.

Correspondingly, obtaining the first content corresponding to the first page and the second content corresponding to the second page may be understood as: obtaining target content.

The target content is the same content corresponding to the live streaming preview page and the live streaming room playing page. That is, the content of the live streaming preview page and the content of the live streaming room playing page are the content of the next frame to be played.

Correspondingly, the manner of rendering the first content and the second content may be: rendering the target content into the first view component corresponding to the live streaming preview page through the first rendering channel; and rendering the target content into the second view component corresponding to the live streaming room playing page through the second rendering channel.

In this embodiment, after rendering the target content into the second view component corresponding to the live streaming room playing page is completed, the page is switched from the live streaming preview page to the live streaming room playing page, thereby ensuring smooth page switching.

According to the technical solution of the embodiments of the present disclosure, first content corresponding to a first page and second content corresponding to a second page are obtained in response to a page switching operation triggered by a user; page switching is to switch from the first page to the second page; the first content and the second content are rendered; in a process of displaying the first content, a rendering progress of the second content is obtained; and the first page is switched to the second page based on the rendering progress. According to the method for page switching provided by the embodiments of the present disclosure, the content corresponding to the first page and the content corresponding to the second page are rendered, and in the process of displaying the content of the first page, the first page is switched to the second page based on the rendering progress of the content of the second page, thereby preventing the problem of abnormal display caused by switching from the first page to the second page before the content of the second page has been fully rendered, ensuring smooth and fluid switching between pages, and improving the page switching reliability and the page display effect.

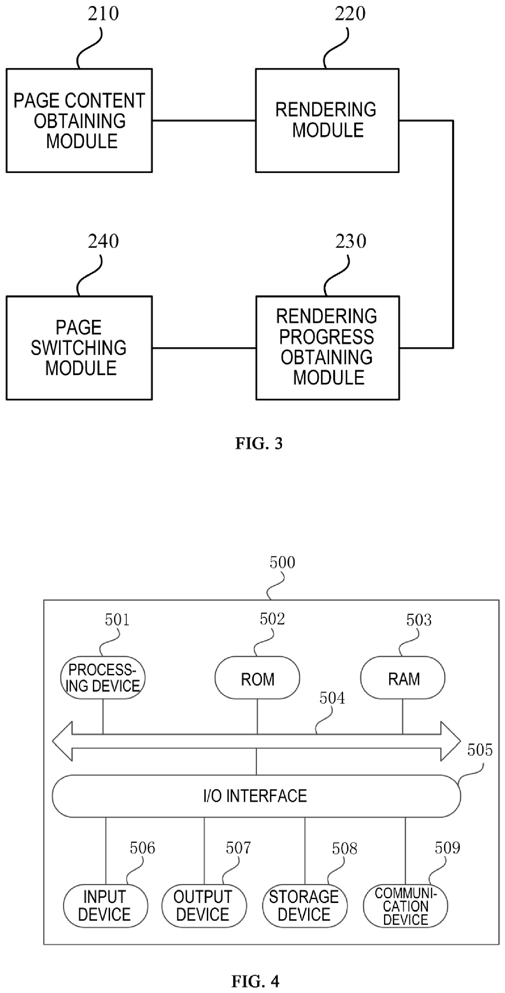

FIG. 3 is a schematic structural diagram of a page switching apparatus according to an embodiment of the present disclosure. As shown in FIG. 3, the apparatus includes a page content obtaining module 210, a rendering module 220, a rendering progress obtaining module 230, and a page switching module 240.

The page content obtaining module 210 is configured to obtain, in response to a page switching operation triggered by a user, first content corresponding to a first page and second content corresponding to a second page. The page switching is to switch from the first page to the second page.

The rendering module 220 is configured to render the first content and the second content.

The rendering progress obtaining module 230 is configured to obtain a rendering progress of the second content in a process of displaying the first content.

The page switching module 240 is configured to switch the first page to the second page based on the rendering progress.

Optionally, the rendering module 220 is further configured to:
establish a first rendering channel corresponding to the first page and a second rendering channel corresponding to the second page;
render the first content into a first view component corresponding to the first page through the first rendering channel;
render the second content into a second view component corresponding to the second page through the second rendering channel.

Optionally, the rendering module 220 is further configured to:
create a page component corresponding to the second page;
create the second view component in the page component; and
render the second content into the second view component through the second rendering channel.

Optionally, when the first content is first video frame content and the second content is second video frame content, the rendering module 220 is further configured to:
rendering, by controlling a player, the first video frame content into the first view component corresponding to the first page through the first rendering channel;
rendering the second content into the second view component corresponding to the second page through the second rendering channel includes:
   rendering, by controlling the player, the second video frame content into the second view component corresponding to the second page through the second rendering channel.

Optionally, the apparatus further includes: a window attribute setting module configured to:
set a window attribute of the second page as transparent and invisible.

Optionally, the rendering progress includes rendering incomplete and rendering complete, and the page switching module 240 is further configured to:
adjust the window attribute of the second page from transparent and invisible to non-transparent and visible, and close the first page to switch from the first page to the second page in accordance with that When the rendering progress is rendering complete;
continuing to display the first content and maintain the window attribute of the second page as transparent and invisible in accordance with that the rendering progress is rendering incomplete.

Optionally, the first page is a live streaming preview page, and the second page is a live streaming room playing page; and the page content obtaining module 210 is further configured to:
obtain target content, where the target content is the same content corresponding to the live streaming preview page and the live streaming room playing page.

The rendering module 220 is further configured to:
render the target content into a first view component corresponding to the live streaming preview page through the first rendering channel;
render the target content into a second view component corresponding to the live streaming room playing page through the second rendering channel.

The apparatus for page switching provided by the embodiments of the present disclosure may perform the method for page switching provided by any embodiment of the present disclosure, and has functional modules and beneficial effects corresponding to the execution of the method.

It should be noted that the units and modules included in the foregoing apparatus are only divided according to the function logic, but are not limited to the foregoing division, as long as the corresponding functions may be implemented. In addition, the specific names of the functional units are merely for ease of distinguishing, and are not intended to limit the protection scope of the embodiments of the present disclosure.

FIG. 4 is a schematic structural diagram of an electronic device according to an embodiment of the present disclosure. Referring to FIG. 4, FIG. 4 is a schematic structural diagram of an electronic device (such as the terminal device or server in FIG. 4) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 4 is merely an example, and should not impose any limitation on the functions and scope of use of the embodiments of the present disclosure.

As shown in FIG. 4, the electronic device 500 may include a processing device (for example, a central processing unit, a graphics processor, etc.) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to communicate wirelessly or wired with other devices to exchange data. While FIG. 4 illustrates the electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program carried on a non-transitory computer readable medium, the computer program including program code for performing the method shown in the flowchart. In such embodiments, the computer program may be downloaded and installed from the network through the communication device 509, or installed from the storage device 508 or from the ROM 502. When the computer program is executed by the processing device 501, the foregoing functions defined in the method of the embodiments of the present disclosure are performed.

The names of messages or information interacted between multiple devices in embodiments of the present disclosure are for illustrative purposes only and are not intended to limit the scope of such messages or information.

The electronic device provided by the embodiments of the present disclosure and the method for page switching provided in the foregoing embodiments belong to the same inventive concept, and technical details not described in detail in this embodiment may refer to the foregoing embodiments, and this embodiment has the same beneficial effects as the foregoing embodiments.

An embodiment of the present disclosure provides a computer storage medium having a computer program stored thereon, the program, when executed by a processor, implements the method for page switching provided in the foregoing embodiments.

It should be noted that the computer-readable medium described above may be a computer-readable signal medium, a computer-readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage medium may include, but are not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, apparatus, or device. In the present disclosure, the computer-readable signal medium may include a data signal propagated in a baseband or as a part of a carrier, where the computer-readable program code is carried. Such a propagated data signal may take a variety of forms including, but not limited to, an electromagnetic signal, an optical signal, or any suitable combination of the foregoing. The computer-readable signal medium may also be any computer-readable medium, other than a computer readable storage medium, that may send, propagate, or transmit a program for use by or in connection with an instruction execution system, apparatus, or device. The program code included on the computer-readable medium may be transmitted with any suitable medium, including, but not limited to: wires, optical cables, RF (radio frequency), or the like, or any suitable combination of the foregoing.

In some implementations, a client and a server may communicate using any currently known or future developed network protocol, such as HTTP (HyperText Transfer Protocol), and may be interconnected with any form or medium of digital data communication (e.g., a communication network). Examples of the communication network include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: obtain, in response to a page switching operation triggered by a user, first content corresponding to a first page and second content corresponding to a second page; where the page switching is to switch from the first page to the second page; render the first content and the second content; obtain a rendering progress of the second content in a process of displaying the first content; and switch the first page to the second page based on the rendering progress.

Computer program code for performing the operations of the present disclosure may be written in one or more programming languages or a combination thereof, the programming languages include, but not limited to, object-oriented programming languages such as Java, Smalltalk, or C++, and conventional procedural programming languages, such as "C" language or similar programming languages. The program code may be executed entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate possibly implemented architecture, functionality, and operation of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented with software, or may be implemented with hardware. In some cases, the name of the unit does not constitute a limitation on the unit itself. For example, a first obtaining unit may be further described as "a unit obtaining at least two Internet Protocol addresses".

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

The above description is merely an illustration of the preferred embodiments of the present disclosure and the principles of the applied technology. It should be understood by those skilled in the art that the disclosure scope involved in the present disclosure is not limited to the technical solutions of the specific combination of the above technical features, and should also cover other technical solutions formed by any combination of the above technical features or their equivalent features without departing from the above disclosed concept, for example, technical solutions formed by mutually replacing the above features and technical features disclosed in the present disclosure (but not limited thereto) having similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method for page switching, comprising:
obtaining, in response to a page switching operation triggered by a user, first content corresponding to a first page and second content corresponding to a second page; wherein the page switching is to switch from the first page to the second page;
rendering the first content and the second content;
obtaining a rendering progress of the second content in a process of displaying the first content; and
switching the first page to the second page based on the rendering progress.

2. The method of claim 1, wherein rendering the first content and the second content comprises:
establishing a first rendering channel corresponding to the first page and a second rendering channel corresponding to the second page;
rendering the first content into a first view component corresponding to the first page through the first rendering channel; and
rendering the second content into a second view component corresponding to the second page through the second rendering channel.

3. The method of claim 2, wherein rendering the second content into the second view component corresponding to the second page through the second rendering channel comprises:
creating a page component corresponding to the second page;
creating the second view component in the page component; and
rendering the second content into the second view component through the second rendering channel.

4. The method of claim 2, wherein in accordance with the first content being first video frame content and the second content being second video frame content,
rendering the first content into the first view component corresponding to the first page through the first rendering channel comprises: rendering, by controlling a player, the first video frame content into the first view component corresponding to the first page through the first rendering channel; and
rendering the second content into the second view component corresponding to the second page through the second rendering channel comprises: rendering, by controlling the player, the second video frame content into the second view component corresponding to the second page through the second rendering channel.

5. The method of claim 1, wherein prior to obtaining the rendering progress of the second content, the method further comprises:
setting a window attribute of the second page as transparent and invisible.

6. The method of claim 5, wherein the rendering progress comprises rendering incomplete and rendering complete; and switching the first page to the second page based on the rendering progress comprises:
adjusting the window attribute of the second page from transparent and invisible to non-transparent and visible, and closing the first page to switch from the first page to the second page in accordance with that the rendering progress is rendering complete; and/or
continuing to display the first content and maintaining the window attribute of the second page as transparent and invisible in accordance with that the rendering progress is rendering incomplete.

7. The method of claim 2, wherein the first page is a live streaming preview page, and the second page is a live streaming room playing page; and obtaining the first content corresponding to the first page and the second content corresponding to the second page comprises:
obtaining target content, wherein the target content is the same content corresponding to the live streaming preview page and the live streaming room playing page; and
rendering the first content and the second content comprises:
rendering the target content into a first view component corresponding to the live streaming preview page through the first rendering channel;
rendering the target content into a second view component corresponding to the live streaming room playing page through the second rendering channel.

8. An apparatus for page switching, comprising:
a page content obtaining module configured to obtain, in response to a page switching operation triggered by a user, first content corresponding to a first page and second content corresponding to a second page, wherein the page switching is to switch from the first page to the second page;
a rendering module configured to render the first content and the second content;
a rendering progress obtaining module configured to obtain a rendering progress of the second content in a process of displaying the first content; and
a page switching module configured to switch the first page to the second page based on the rendering progress.

9. An electronic device, comprising:
one or more processors;
a storage device for storing one or more programs;
wherein the one or more programs, when executed by the one or more processors, cause the one or more processors to implement the method for page switching of any of claims 1 to 7.

10. A storage medium comprising computer-executable instructions, wherein the computer-executable instructions, when executed by a computer processor, are configured to perform the method for page switching of any of claims 1 to 7.
